# EUROPEAN PATENT APPLICATION

(11) **EP 4 040 522 A1**
(43) Date of publication of application: **10.08.2022**
(21) Application number: 22152471.3
(22) Date of filing: 20.01.2022
(51) Int. Cl.: H01M 4/02, H01M 4/36, H01M 4/62, H01M 4/70, H01M 10/0525, H01M 10/0562, H01M 50/105, H01M 10/654, H01M 10/659

(54) **ALL-SOLID-STATE RECHARGEABLE BATTERY**

(30) Priority: 03.02.2021 JP 2021016112; 28.06.2021 KR 20210084111
(71) Applicant: Samsung SDI Co., Ltd., Yongin-si, Gyeonggi-do 17084 (KR)
(72) Inventor: Fujiki, Satoshi, Yokohama-shi, Kanagawa-ken (JP); Ishihara, Hiroe, Yokohama-shi, Kanagawa-ken (JP); Aihara, Yuichi, Yokohama-shi, Kanagawa-ken (JP)
(74) Representative: Gulde & Partner

(57) **Abstract**

Disclosed is an all-solid-state rechargeable battery including a positive electrode layer, a negative electrode layer, and a solid electrolyte layer between the positive electrode layer and the negative electrode layer, wherein the positive electrode layer includes a plate-shaped positive electrode current collector, and a positive electrode active material layer on the positive electrode current collector, the positive electrode layer includes an endothermic material that absorbs heat by a decomposition reaction, and a content of the endothermic material in the positive electrode layer is greater than or equal to about 1 part by weight and less than or equal to about 30 parts by weight when the total weight of the positive electrode active material layer is 100 parts by weight.

## Description

### BACKGROUND

### 1. Field

An all-solid-state rechargeable battery is disclosed.

### 2. Description of the Related Art

All-solid-state rechargeable batteries have higher safety than rechargeable batteries using an organic electrolyte solution but may generate oxygen when placed under a high temperature environment of 200 °C or higher and the like or depending on a composition of a positive electrode active material. When this oxygen causes an exothermic reaction with a sulfide-based solid electrolyte, the all-solid-state batteries may be further heated up and thus have a risk of being ignited under the presence of flammable substances.

### SUMMARY

In order to further enhance safety of an all-solid-state rechargeable battery, an all-solid-state rechargeable battery capable of suppressing the aforementioned exothermic reaction even in a high-temperature environment such as 200 °C or higher is provided.

As a technique for suppressing exothermicity of the rechargeable batteries, as shown in JP 1999-191417 (Patent Document 1), for example, a liquid system rechargeable battery containing a compound having a decomposition reaction as the endothermic reaction (hereinafter, referred to as an endothermic material) is considered. However, when this endothermic material is actually applied to the all-solid-state rechargeable battery, the decomposition reaction of the endothermic material, that is, the endothermic reaction hardly occurs in the all-solid-state rechargeable battery unlike the liquid system rechargeable battery described in Patent Document 1. Accordingly, as a result of repeating studies on conditions necessary for sufficiently causing the endothermic reaction in the all-solid-state rechargeable battery or a content of the endothermic material, the present invention has been completed.

In other words, the all-solid-state rechargeable battery as defined in claim 1 includes a positive electrode layer, a negative electrode layer, and a solid electrolyte layer between the positive electrode layer and the negative electrode layer, wherein the positive electrode layer includes a plate-shaped positive electrode current collector, and a positive electrode active material layer on the positive electrode current collector, the positive electrode layer includes an endothermic material that absorbs heat by a decomposition reaction, and a content of the endothermic material in the positive electrode layer is greater than or equal to 1 part by weight and less than or equal to 30 parts by weight when the total weight of the positive electrode active material layer is 100 parts by weight.

According to the all-solid-state rechargeable battery configured in this way, since the positive electrode layer under an oxidizing environment includes endothermic material during charging, the decomposition reaction of the endothermic material is easy to occur during charging, and a sufficient endothermic effect may be exhibited even at a temperature of less than 200 °C. As a result, with respect to the all-solid-state rechargeable battery, it is possible to prevent rapid heat generation at 200 °C or higher in which oxygen may be generated during charging.

In addition, since the content of the endothermic material in the positive electrode layer is in the range of greater than or equal to 1 part by weight and less than or equal to 30 parts by weight when the total weight of the positive electrode active material layer is 100 parts by weight, while sufficiently ensuring charging capacity of the positive electrode layer, a sufficient endothermic effect may be exhibited.

If the endothermic material is included in the positive electrode active material layer or disposed between the positive electrode active material layer and the positive electrode current collector, the endothermic material may be reliably placed in an oxidizing environment during charging.

As a specific embodiment, the endothermic material may be at least one compound selected from the group essentially consisting of a carbonate compound, a hydroxide compound, and a compound containing crystallized water.

The carbonate compound may be selected from the group consisting of lithium carbonate, rubidium carbonate, barium carbonate, cobalt carbonate, iron carbonate, nickel carbonate, zinc carbonate, sodium bicarbonate, potassium bicarbonate, rubidium bicarbonate, and cesium bicarbonate.

The hydroxide compound may be selected from the group consisting of zinc hydroxide, aluminum hydroxide, cadmium hydroxide, chromium hydroxide, cobalt hydroxide, nickel hydroxide, manganese hydroxide, calcium hydroxide, magnesium hydroxide, zirconium hydroxide, iron hydroxide, and nickel hydroxide.

The compound containing crystallized water may be selected from the group consisting of aluminum oxide hydrate, barium nitrate hydrate, calcium sulfate hydrate, cobalt phosphate hydrate, antimony oxide hydrate, tin oxide hydrate, titanium oxide hydrate, bismuth oxide hydrate, and tungsten oxide hydrate.

Examples of the carbonate compound may include lithium carbonate.

The hydroxide compound may include, for example, aluminum hydroxide.

When the solid electrolyte layer includes a sulfide-based solid electrolyte, an exothermic reaction is likely to occur when the battery is placed in a high-temperature environment, so that the effects of the present disclosure may be remarkably exhibited.

In the viewpoint of suppressing battery deformation and the like, it is desirable that a volume difference inside an exterior body at 80 °C and 25 °C may be within 5% of the volume at 25 °C.

When an exterior body for accommodating the positive electrode layer, the negative electrode layer, and the solid electrolyte layer therein is further provided, and when the exterior body is a film type, a volume change due to the decomposition reaction of the endothermic material may easily affect an overall volume of the battery, and thus an effect of this disclosure may be exhibited remarkably.

It is possible to further improve safety of the all-solid-state rechargeable battery, suppress the aforementioned exothermic reaction even in a high-temperature environment, and suppress rapid heat generation during charging.

### BRIEF DESCRIPTION OF THE DRAWINGS

FIG. 1 is a cross-sectional view showing a schematic configuration of an all-solid-state rechargeable battery according to an embodiment.
FIG. 2 is a cross-sectional view showing a schematic configuration of an all-solid-state rechargeable battery according to another embodiment.
FIG. 3 is a cross-sectional view illustrating a schematic configuration of an all-solid-state rechargeable battery according to another embodiment.

### DETAILED DESCRIPTION

Hereinafter, embodiments of the present invention are described in detail with reference to the accompanying drawings. On the other hand, in the present specification and drawings, the same reference numerals are assigned to components having substantially the same functional configuration, and redundant descriptions are omitted.

### <1. Basic Configuration of All-solid-state Rechargeable Battery According to the Present Embodiment>

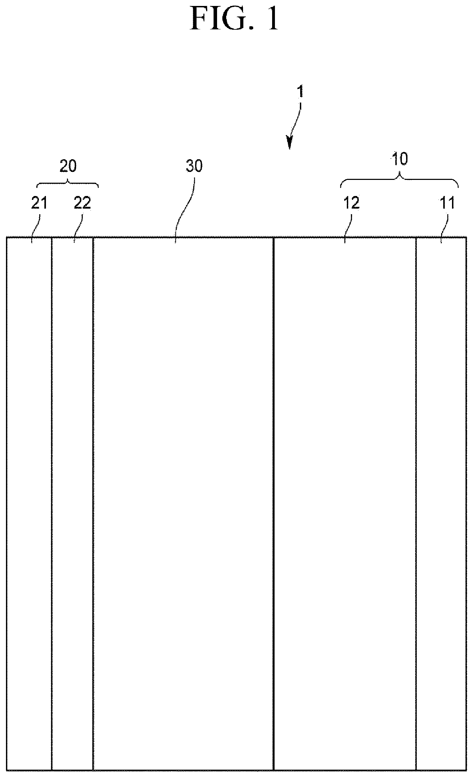

As shown in FIG. 1, the all-solid-state rechargeable battery 1 according to the present embodiment includes a positive electrode layer 10, a negative electrode layer 20, a solid electrolyte layer 30, and an exterior body 40 accommodating them therein.

### (1-1. Positive Electrode Layer)

The positive electrode layer 10 includes a positive electrode current collector 11 and a positive electrode active material layer 12. Examples of the positive electrode current collector 11 may include a plate or thin body made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 11 may be omitted. The positive electrode active material layer 12 may include a positive electrode active material and a solid electrolyte. On the other hand, the solid electrolyte contained in the positive electrode active material layer 12 may or may not be of the same type as the solid electrolyte contained in the solid electrolyte layer 30. The details of the solid electrolyte will be described in detail in the section of the solid electrolyte layer 30.

The positive electrode active material may be any positive electrode active material capable of reversibly intercalating and deintercalating lithium ions. For example, the positive electrode active material may include a lithium salt such as lithium cobalt oxide (hereinafter referred to as "LCO"), lithium nickel oxide, lithium nickel cobalt oxide, and lithium nickel cobalt aluminate (hereinafter referred to as "NCA"), lithium nickel cobalt manganate (hereinafter referred to as "NCM"), lithium manganate, lithium iron phosphate; nickel sulfide, copper sulfide, lithium sulfide, sulfur, iron oxide; vanadium oxide or the like. These positive electrode active materials may be used alone, respectively, and may be used in combination of two or more.

In addition, the positive electrode active material may be formed by including a lithium salt of a transition metal oxide having a layered rock salt structure among the aforementioned lithium salts. Herein, the "layered rock salt structure" is a structure in which oxygen atomic layers and metal atomic layers are alternately arranged in the <111> direction of the cubic rock salt structure, and as a result, each atomic layer forms a two-dimensional plane. In addition, "cubic rock salt structure" refers to a sodium chloride type structure, which is one type of crystal structure, and specifically, a structure in which the face-centered cubic lattice formed by each of the cations and anions is arranged with a shift of only 1/2 of the corners of the unit lattice from each other.

Examples of the lithium salt of the transition metal oxide having such a layered rock salt structure may include lithium salts of ternary transition metal oxides such as LiNiₓCoyAl_{z}O₂ (NCA) or LiNiₓCo_{y}Mn_{z}O₂ (NCM) (0<x<1, 0<y<1, 0<z<1, and x+y+z=1).

When the positive electrode active material includes a lithium salt of a ternary transition metal oxide having the aforementioned layered rock salt structure, the energy density and thermal stability of the all-solid-state rechargeable battery 1 may be improved.

The positive electrode active material may be covered with a coating layer. Herein, the coating layer of this embodiment may be any as long as it is a well-known coating layer of the positive electrode active material of an all-solid-state rechargeable battery. Examples of the coating layer may include Li₂O-ZrO₂, and the like.

In addition, when the positive electrode active material is formed from a lithium salt of a ternary transition metal oxide such as NCA or NCM, and nickel (Ni) is included as the positive electrode active material, capacity density of the all-solid-state rechargeable battery 1 is increased, and metal elution from the positive electrode active material in a charged state may be reduced. Accordingly, the all-solid-state rechargeable battery 1 according to the present embodiment may improve long-term reliability and cycle characteristics in a charged state. In order to further exhibit such characteristics, it is more desirable that content of nickel (Ni) is high. The nickel content in the positive electrode active material may be greater than or equal to about 60 mol%, and desirably greater than or equal to about 80 mol%. On the other hand, when it is less than or equal to about 95 mol%, since decrease of battery capacity in charge/discharge evaluation may be suppressed.

Herein, the positive electrode active material may have a shape of a particle, such as a regular spherical shape and an ellipsoidal shape. In addition, the particle diameter of the positive electrode active material is not particularly limited, and may be within a range applicable to the positive electrode active material of a conventional all-solid-state rechargeable battery. On the other hand, a content of the positive electrode active material in the positive electrode layer 10 is also not particularly limited, as long as it is within a range applicable to the positive electrode layer 10 of a conventional all-solid rechargeable battery. Further, in the positive electrode active material layer 12, in addition to the aforementioned positive electrode active material and solid electrolyte, for example, additives such as a conductive auxiliary agent, a binder, a filler, a dispersant, or an ion conductive auxiliary agent may be suitably blended.

Examples of the conductive auxiliary agent that may be blended in the positive electrode active material layer 12 may include graphite, carbon black, acetylene black, ketjen black, a carbon fiber, and a metal powder. In addition, the binder that may be blended in the positive electrode active material layer 12 may include, for example, a styrene butadiene rubber (SBR), polytetrafluoroethylene, polyvinylidene fluoride, polyethylene, and the like. In addition, as the filler, the dispersant, the ion conductive auxiliary agent, etc. which may be blended in the positive electrode active material layer 12, well-known materials which can generally be used for the electrode of an all-solid-state rechargeable battery may be used.

### (1-2. Negative Electrode Layer)

The negative electrode layer 20 may include a negative electrode current collector 21 and a negative electrode active material layer 22. The negative electrode current collector 21 may be desirably made of a material that does not react with lithium, that is, neither an alloy nor a compound is formed. Examples of the material constituting the negative electrode current collector 21 may include copper (Cu), stainless steel, titanium (Ti), iron (Fe), cobalt (Co), and nickel (Ni). The negative electrode current collector 21 may be composed of any one of these metals, or may be composed of an alloy of two or more metals or a clad material. The negative electrode current collector 21 may be, for example, a plate or thin type.

The negative electrode active material layer 22 may include a negative electrode active material. Examples of the negative electrode active material include amorphous carbon and an alloy-forming element that forms an alloy with lithium. The alloy-forming element may be any one or more types selected from gold, platinum, palladium, silicon, silver, aluminum, bismuth, tin, and zinc. The amorphous carbon may include, for example, carbon black, graphene, graphite, and the like. Examples of the carbon black may include acetylene black, furnace black, and ketjen black. In order to improve electronic conductivity, the surface of silicon may be coated with a carbon layer having a thickness of about 1 nm to about 10 nm.

Herein, when one or more of gold, platinum, palladium, silicon, silver, aluminum, bismuth, tin, and zinc is used as the alloy-forming element, these negative electrode active materials may be, for example, in the form of particles and may have a particle diameter of less than or equal to about 4 µm, and desirably less than or equal to about 300 nm. In this case, the characteristics of the all-solid-state rechargeable battery 1 are also improved. Herein, the particle size of the negative electrode active material may be, for example, a median diameter (so-called D50) measured using a laser particle size distribution meter. In the negative electrode active material layer 22, in addition to the above components, additives used in conventional all-solid rechargeable batteries, for example, a binder, a filler, a dispersant, an ion conductive auxiliary agent, etc. may be appropriately blended.

### (1-3. Solid Electrolyte Layer)

The solid electrolyte layer 30 may be formed between the positive electrode layer 10 and the negative electrode layer 20 and may include a solid electrolyte.

The solid electrolyte may be composed of, for example, a sulfide-based solid electrolyte material. The sulfide-based solid electrolyte material may include, for example, Li₂S-P₂S₅, Li₂S-P₂S-LiX (wherein, X is a halogen element, for example I, or CI), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are an integer and Z is Ge, Zn, or Ga), Li₂S-GeS₂, Li₂S-SiS₂-Li₃PO₄, Li₂S-SiS₂-LiₚMO_{q} (wherein, p and q are an integer and M is P, Si, Ge, B, Al, Ga, or In). Herein, the sulfide-based solid electrolyte material may be produced by treating a starting raw material (e.g., Li₂S, P₂S₅, etc.) by a melt quenching method, a mechanical milling method, or the like. Moreover, heat treatment may be further performed. The solid electrolyte may be amorphous or crystalline, or may be in a mixed state thereof.

In addition, the solid electrolyte may be one containing at least sulfur (S), phosphorus (P) and lithium (Li) as constituent elements among the above sulfide solid electrolyte materials, and in particular, desirably, one containing Li₂S-P₂S₅. Herein, when using one containing Li₂S-P₂S₅ as the sulfide-based solid electrolyte material forming the solid electrolyte, a mixing mole ratio of Li₂S and P₂S₅ may be, for example, in the range of Li₂S:P₂S₅ = about 50:50 to about 90:10.

In addition, the solid electrolyte layer 30 may further include a binder. The binder included in the solid electrolyte layer 30 may include, for example, a styrene butadiene rubber (SBR), polytetrafluoroethylene, polyvinylidene fluoride, polyethylene, etc. The binder in the solid electrolyte layer 30 may be the same as or different from the binder in the positive electrode active material layer 12 and the negative electrode active material layer 22.

### (1-4. Exterior Body)

The exterior body 40 accommodates the positive electrode layer 10, the negative electrode layer 20, and the solid electrolyte layer 30 therein as described above, and is, for example, formed by a film having flexibility. Examples of the film may include a laminate film formed by sandwiching a thin metal film such as aluminum or SUS with a resin such as polypropylene or polyethylene. A thickness of the laminated film used for the exterior body 40 may be greater than or equal to about 30 µm and less than or equal to about 150 µm. Other materials may be rigid metals. For example, the can produced by aluminum, SUS, etc. may be used. The shape of the exterior body may be square (rectangular) or cylindrical.

### <2. Characteristic Configuration of All-solid-state Rechargeable battery according to the present embodiment>

The positive electrode active material layer 12 may include an endothermic material, which is a material that absorbs heat by decomposition reaction. Examples of the endothermic material may include a carbonate compound, a hydroxide compound, and a compound containing crystallized water (e.g., a hydrate compound). Examples of the carbonate compound may include carbonate and bicarbonate. Among them, the carbonate compound may include lithium carbonate, rubidium carbonate, barium carbonate, cobalt carbonate, iron carbonate, nickel carbonate, zinc carbonate, sodium bicarbonate, potassium bicarbonate, rubidium bicarbonate, and cesium bicarbonate.

Examples of the hydroxide compound may include zinc hydroxide, aluminum hydroxide, cadmium hydroxide, chromium hydroxide, cobalt hydroxide, nickel hydroxide, manganese hydroxide, calcium hydroxide, magnesium hydroxide, zirconium hydroxide, iron hydroxide, and nickel hydroxide.

Examples of the compound containing crystallized water include aluminum oxide hydrate, barium nitrate hydrate, calcium sulfate hydrate, cobalt phosphate hydrate, antimony oxide hydrate, tin oxide hydrate, titanium oxide hydrate, bismuth oxide hydrate, and tungsten oxide hydrate.

The endothermic material may include one type or multiple types of the aforementioned materials.

A content of the endothermic material may be desirably included in the range of greater than or equal to 1 part by weight and less than or equal to 30 parts by weight when the total amount of the positive electrode active material layer 12 is 100 parts by weight. The content of the endothermic material may be desirably greater than or equal to 5 parts by weight and less than or equal to 25 parts by weight, and more desirably greater than or equal to 5 parts by weight and less than or equal to 10 parts by weight.

### <3. Method of Producing All-solid-state Rechargeable Battery According to the Present Embodiment>

Next, a method of producing the all-solid-state rechargeable battery 1 according to on the present embodiment is described. The all-solid-state rechargeable battery 1 according to the present embodiment may be produced by respectively producing the positive electrode layer 10, the negative electrode layer 20, and the solid electrolyte layer 30, laminating each layer, and finally covering them with the exterior body 40.

### (3-1. Production Process of Positive Electrode Layer)

First, the materials (positive electrode active material, endothermic material, binder, etc.) constituting the positive electrode active material layer 12 are added to a non-polar solvent such as dehydrated xylene to prepare a slurry (the slurry may be a paste and other slurry is also the same). Then, the obtained slurry is applied on the positive electrode current collector 11 and dried. Then, the positive electrode layer 10 is produced by pressurizing the obtained laminate (for example, performing pressurization using hydrostatic pressure). The pressurization process may be omitted. The positive electrode layer 10 may be produced by pressing/compressing a mixture of materials constituting the positive electrode active material layer 12 in a pellet form, or stretching it in a sheet form. When the positive electrode layer 10 is produced by these methods, the positive electrode current collector 11 may be compressed on the produced pellet or sheet.

### (3-2. Production Process of Negative Electrode Layer)

First, the negative electrode active material layer materials (a negative electrode active material, an alloy-non-forming element, a binder, etc.) constituting the negative electrode active material layer 22 are added to a polar solvent or a non-polar solvent to prepare a slurry. Then, the obtained slurry is applied on the negative electrode current collector 21 and dried. Then, the negative electrode layer 20 is produced by pressurizing the obtained laminate (for example, performing pressurization using hydrostatic pressure). The pressurization process may be omitted.

### (3-3. Production Process of Solid Electrolyte Layer)

The solid electrolyte layer 30 may be made of a solid electrolyte formed from a sulfide-based solid electrolyte material. First, the starting materials are treated by a melt quenching method or a mechanical milling method. For example, when the melt quenching method is used, the starting materials (for example, Li₂S, P₂S₅, and the like) are mixed in each predetermined amount and pelletized and then, reacted at a predetermined reaction temperature under vacuum and quenched, preparing a sulfide-based solid electrolyte material. On the other hand, the reaction temperature of the Li₂S and P₂S₅ mixture may be desirably about 400 °C to about 1000 °C and more desirably, about 800 °C to about 900 °C. In addition, reaction time may be desirably about 0.1 hour to about 12 hours and more desirably, about 1 hour to about 12 hours. Furthermore, a quenching temperature of the reactant may be generally at less than or equal to about 10 °C and desirably less than or equal to about 0 °C, and a quenching rate may be generally about 1 °C/sec to about 10000 °C/sec and desirably, about 1 °C/sec to about 1000 °C/sec.

In addition, when the mechanical milling method is used, the starting materials (for example, Li₂S, P₂S₅, and the like) are stirred and reacted by using a ball mill and the like, preparing the sulfide-based solid electrolyte material. On the other hand, the mechanical milling method is not particularly limited with respect to a stirring speed and stirring time, but as the stirring speed is fast, the sulfide-based solid electrolyte material may be produced quickly, and as the stirring becomes longer, a conversion rate of the raw material to the sulfide-based solid electrolyte material may be increased.

Thereafter, the mixed raw material obtained in the melt quenching method or the mechanical milling method is heat-treated at a predetermined temperature and pulverized, preparing a particle-shaped solid electrolyte. When the solid electrolyte has a glass transition point, it may be changed from amorphous to crystalline through the heat treatment.

Subsequently, the solid electrolyte obtained in the aforementioned method may be formed into the solid electrolyte layer 30 by a suitable film-forming method, for example, an aerosol deposition method, a cold spray method, a sputtering method, and the like. On the other hand, the solid electrolyte layer 30 may be produced by pressing solid electrolyte particles group. In addition, the solid electrolyte layer 30 may be formed by mixing the solid electrolyte, a solvent, and a binder and then, coating and drying the mixture.

### (3-4. Assembly Process of All-solid-state Rechargeable Battery)

The positive electrode layer 10, the negative electrode layer 20, and the solid electrolyte layer 30 formed in the above method are laminated and sandwiched together and then, covered with a laminate film forming the exterior body 40 and pressed (for example, pressed with a hydrostatic pressure), producing the all-solid-state rechargeable battery 1 according to the present embodiment.

### <4. Effects of the Present Embodiment>

According to the all-solid-state rechargeable battery constructed in this way, since the positive electrode active material layer under an oxidizing environment during charging includes the endothermic material, a decomposition reaction of the endothermic material occurs in an appropriate temperature range, and a sufficient endothermic effect may be exhibited.

Since the content of the endothermic material is greater than or equal to about 1 part by weight and less than or equal to about 30 parts by weight, it is possible to sufficiently exhibit the endothermic effect while sufficiently securing charging capacity of the positive electrode active material layer 12.

### <5. Another Embodiment>

### <5-1. Configuration of All-solid-state Rechargeable Battery According to the Second Embodiment >

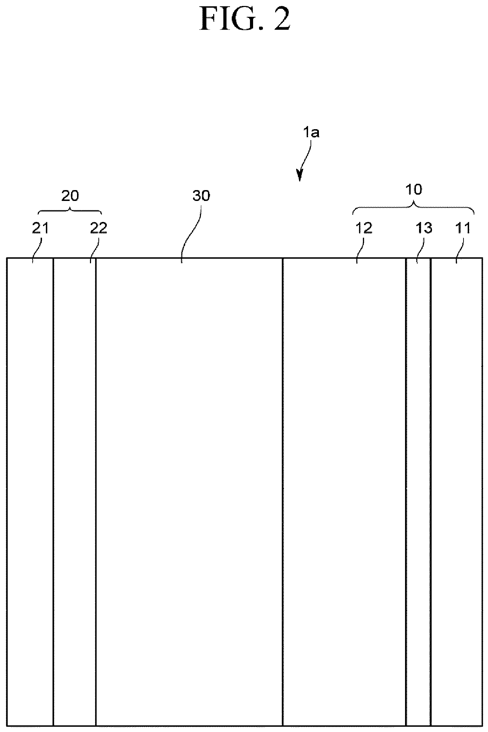

As shown in FIG. 2, the positive electrode layer 10 may further include a conductive layer 13 between the positive electrode current collector 11 and the positive electrode active material layer 12. The conductive layer 13 may protect the positive electrode current collector, and may include, for example, a conductive material and a binder.

The conductive material included in the conductive layer 13 may include graphite, carbon black, acetylene black, ketjen black, a carbon fiber, a metal powder, or the like. Further, examples of the binder included in the conductive layer 13 may include a styrene butadiene rubber (SBR), polytetrafluoroethylene, polyvinylidene fluoride, and polyethylene. The conductive layer 13 may include the aforementioned endothermic material. When the endothermic material is included, the conductive layer 13 may have, for example, a specific composition of greater than or equal to about 6 wt% and less than or equal to about 54 wt% of the conductive material, greater than or equal to about 24 wt% and less than or equal to about 81 wt% of the endothermic material, and greater than or equal to 10 wt% and less than or equal to 40 wt% of the binder.

The content of the endothermic material included in the conductive layer 13, or a total content of the endothermic material included in the positive electrode active material layer 12 and endothermic material included in the conductive layer 13 may be greater than or equal to about 1 part by weight and less than or equal to about 30 parts by weight when the total weight of the positive electrode active material layer 12 is 100 parts by weight. In this embodiment, the endothermic material may be included in both the positive electrode active material layer 12 and the conductive layer 13 or in the conductive layer 13 alone.

Even in this embodiment, like the aforementioned embodiment, sufficient endothermic effects may be obtained by using greater than or equal to about 1 part by weight of the endothermic material when the total weight of the positive electrode active material layer 12 is 100 parts by weight. In addition, when the content of the endothermic material is less than or equal to about 30 parts by weight, a thickness of the conductive layer 13 may be suppressed, while conductivity of the conductive layer 13 is maintained, resultantly, suppressing a volume increase of the all-solid-state rechargeable battery 1. On the other hand, the thickness of the conductive layer may be desirably greater than or equal to about 0.5 µm and less than or equal to about 10 µm and more desirably, greater than or equal to about 1 µm and less than or equal to about 5 µm. In this embodiment, the conductive layer 13 containing the endothermic material exhibits endothermic effects and thus may be referred to as an endothermic layer.

### <5-2. Method for Producing All-solid-state Rechargeable Battery According to the Second Embodiment>

Next, a method of producing the all-solid-state rechargeable battery 1 according to second embodiment is described. In the producing process of the positive electrode layer 10 of the all-solid-state rechargeable battery 1 according to the first embodiment, the materials (a conductive material, an endothermic material, a binder, etc.) constituting the conductive layer 13 are added to a non-polar solvent to form a slurry, and the slurry is applied on the positive electrode current collector 11 and dried to form the conductive layer 13. On this conductive layer 13, the slurry for forming the positive electrode active material layer 12 is applied and dried to form the positive electrode active material layer 12, and pressurized to produce the positive electrode layer 10. The other processes may be performed similarly to the first embodiment to produce the all-solid-state rechargeable battery 1.

### < 6. Configuration of All-solid-state Rechargeable Battery According to the Third Embodiment >

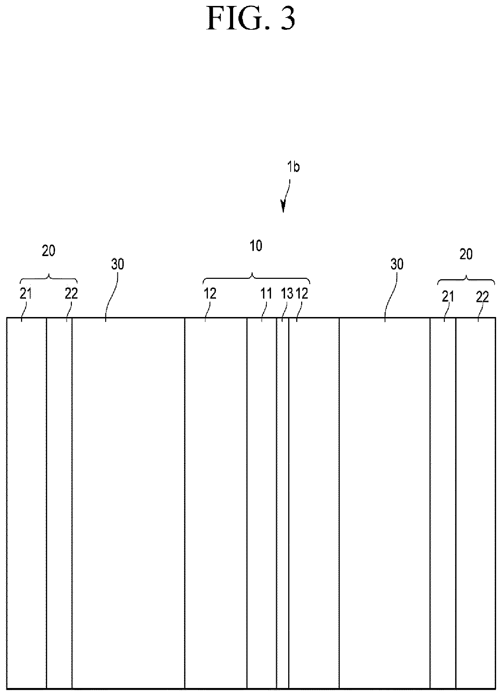

In the aforementioned embodiment, the all-solid-state rechargeable battery 1 having one each of the positive electrode layer 10, the negative electrode layer 20, and the solid electrolyte layer 30 is described, but as shown in FIG. 3, the all-solid-state rechargeable battery 1 may be configured, for example, by disposing the solid electrolyte layer 30 on both surfaces of the positive electrode layer 10 and the negative electrode layer 20 on the outsides of these solid electrolyte layers 30.

Even in the case of the all-solid-state rechargeable battery 1 having such a configuration, the conductive layer 13 may be provided between the positive electrode current collector 11 and the positive electrode active material layer 12. The conductive layer 13 does not necessarily have to be formed on both surfaces of the positive electrode current collector 11, and as shown in FIG. 3, the conductive layer 13 may be formed on one surface of the positive electrode current collector 11. In addition, the endothermic material may be included in the positive electrode active material layer 12 and/or the conductive layer 13 of the all-solid-state rechargeable battery 1.

As mentioned above, although this invention was described in detail regarding embodiments, referring an accompanying drawing, the present disclosure is not limited thereto.

Those of ordinary skill in the art to which the present invention pertains may understand that various examples of changes or modifications may be made within the scope of the technical idea described in the claims and so these may also be within the technical scope of the present invention.

Examples of the all-solid-state rechargeable battery according to the present disclosure will be described in more detail below, but the present disclosure is not limited thereto.

### (Example 1)

### [Production of Positive Electrode Layer]

LiNi_{0.8}Co_{0.15}Al_{0.05}O₂ (NCA) ternary powder as a positive electrode active material, Li₂S-P₂S₅ (80:20 mol%) amorphous powder as a sulfide-based solid electrolyte, and vapor grown carbon fiber powder as a conductive material (a conductive auxiliary agent) of a positive electrode layer are weighed in a weight ratio of 60:35:5 and mixed with a rotating/revolving mixer. In addition, 5 parts by weight of lithium carbonate is weighed based on 100 parts by weight of this mixed powder and added thereto and then, mixed with the rotating/revolving mixer. Subsequently, a dehydrated xylene solution in which SBR as a binder is dissolved is added to be 5.0 wt% based on the total weight of the mixed powder including the endothermic material, preparing a primary mixed solution. Since this primary mixed solution has the same amount of a solid content excluding the solvent of the dehydrated xylene solution and the like as that of a positive electrode active material layer, in the present example, 4.5 wt% of the endothermic material (lithium carbonate) is included based on the total positive electrode active material layer.

In addition, an appropriate amount of dehydrated xylene for adjusting viscosity is added to this primary mixed solution, preparing a secondary mixed solution. Furthermore, in order to improve dispersibility of the mixed powder, zirconia balls with a diameter of 5 mm are put into the secondary mixed solution so that the mixed powder, the zirconia balls, and spaces respectively may take 1/3 of a total volume of a kneading vessel. Subsequently, a tertiary mixed solution produced therefrom is put into the rotating/revolving mixer and stirred at 3000 rpm for 3 minutes, preparing a positive electrode active material layer coating solution.

Subsequently, after preparing a 20 µm-thick aluminum foil current collector as a positive electrode current collector, the positive electrode current collector is mounted on a desktop screen printing machine, and the positive electrode active material layer coating solution is coated on the sheet by using a metal mask with a size of 2.0 cm × 2.0 cm and a thickness of 150 µm. The sheet coated with the positive electrode active material layer coating solution is dried on a 60 °C hot plate for 30 minutes and then, vacuum-dried at 80 °C for 12 hours. Accordingly, on the positive electrode current collector, a positive electrode active material layer is formed. After the drying, the positive electrode current collector and the positive electrode active material layer have a total thickness of 165 µm or so.

### [Production of Negative Electrode Layer]

Graphite powder (vacuum-dried at 80 °C for 24 hours) as a negative electrode active material and PVDF as a binder are weighed in a weight ratio of 95.0:5.0. Subsequently, this mixture and an appropriate amount of N-methyl-2-pyrrolidone (hereinafter, NMP) are put in the rotating/revolving mixer and then, stirred at 3000 rpm for 3 minutes and foam-removed for 1 minute, preparing a negative electrode active material layer coating solution. After preparing a 16 µm-thick copper foil current collector as a negative electrode current collector, the negative electrode active material layer coating solution is applied on the copper foil current collector by using a blade. The negative electrode active material layer coating solution on the copper foil current collector has a thickness of 150 µm or so. The sheet coated with the negative electrode active material layer coating solution is placed in a drier heated to 80 °C and dried for 15 minutes. In addition, after the drying, the sheet is vacuum-dried 80 °C for 24 hours. Accordingly, a negative electrode layer is formed. The negative electrode layer has a thickness of 140 µm or so.

### [Production of Solid Electrolyte Layer]

A dehydrated xylene solution in which SBR is dissolved is added to Li₂S-P₂S₅ (a mole ratio of 80:20) amorphous powder as a sulfide-based solid electrolyte so that 2.0 wt% of SBR is included based on the total weight of the mixed powder, preparing a primary mixed solution. In addition, an appropriate amount of dehydrated xylene for adjusting viscosity is added to this primary mixed solution, preparing a secondary mixed solution. In addition, in order to improve dispersibility of the mixed powder, zirconia balls with a diameter of 5 mm are added thereto so that the mixed powder, the zirconia balls, and spaces respectively take 1/3 of a total volume of the kneading vessel, preparing a third solution. The third mixed solution prepared therefrom is put in the rotating/revolving mixer and then, stirred at 3000 rpm, preparing an electrolyte layer coating solution. After loading the negative electrode layer on the desktop screen printing machine, this electrolyte layer coating solution is coated on the negative electrode active material layer by using a 500 µm metal mask. Subsequently, the sheet coated with the electrolyte layer coating solution is dried on a 40 °C hot plate for 10 minutes and then, vacuum-dried at 40 °C for 12 hours. Accordingly, on the negative electrode layer, a solid electrolyte layer is formed. After the drying, the solid electrolyte layer has a total thickness of 300 µm or so.

### [Production of All-solid-state Battery]

The sheet composed of the negative electrode layer and the solid electrolyte layer is punched into 3.5 cm × 3.5 cm, and the positive electrode layer is punched into 3.0 cm × 3.0 cm with a Thompson blade and then, laminated with a roll press machine set at a thickness of 150 µm in a dry lamination method, producing a single cell of an all-solid-state battery cell. However, the cell has a layer thickness of 400 µm or so.

### [Sealing of All-solid-state battery]

The produced single cell is placed in an aluminum laminate film equipped with a terminal, evacuated to 100 Pa with a vacuum machine, and then, packed through thermal sealing. The obtained all-solid-state battery cell has a total thickness of 600 µm or so.

### [Evaluation of Battery Characteristics]

The single cell is measured with respect to capacity (mAh) by using a charge/discharge evaluation device (TOSCAT-3100) made by Toyo System Inc. Herein, charges and discharges of the cell are performed under an environment of 60 °C. The capacity of the single cell is measured by performing the charges up to 4.20 V at a current of 0.1 mA, and the discharges down to 2.50 V at a current of 0.1 mA.

### [Warming Experiment]

The all-solid-state battery cell is charged up to 4.20 V and stored in an 80 °C thermostat for 24 hours. Before and after the storage, a thickness change of the battery cell is measured. In the battery cell enclosed in the laminate bag in this example, a thickness change ratio exhibits a total volume change ratio of the battery cell as it is.

### [DSC Experiment]

The battery cell is charged up to 4.20 V, and then, a DSC sample is prepared in a glove box under an Ar atmosphere according to the following procedure. The single cell is taken out from the laminate bag which is an exterior body and then, punched to have a hole with a diameter of ϕ 2.5 mm. The punched single cell is put in a sample pan made by SUS and set with a cover thereon and then, joined together with a press machine to seal a mouth thereof. This DSC sample is measured with respect to heat capacity by using a DSC measuring device (DSC7000X) made by Hitachi High-Tech Science Inc. The heat capacity is measured from room temperature to 500 °C and used to estimate integrated heat capacity. When the integrated heat capacity of Comparative Example 1 is set as 100%, an integrated heat capacity change rate in each evaluation example is approximated as a reduction rate.

### (Example 2)

A positive electrode layer is formed in the same manner as Example 1 except that the amount of the lithium carbonate added to form the positive electrode active material layer is changed into 10 parts by weight of based on 100 parts by weight of the mixed powder.

### (Example 3)

A positive electrode layer is formed in the same manner as Example 1 except that the amount of the lithium carbonate added to form the positive electrode active material layer is changed into 1 part by weight of based on 100 parts by weight of the mixed powder.

### (Example 4)

A positive electrode layer is formed in the same manner as Example 1 except that the amount of the lithium carbonate added to form the positive electrode active material layer is changed into 25 parts by weight based on 100 parts by weight of the mixed powder.

### (Example 5)

A positive electrode layer is formed by adding the lithium carbonate not to the positive electrode active material layer but to a conductive layer formed between the positive electrode current collector and the positive electrode active material layer. A specific method of producing this is illustrated hereinafter. Acetylene black as a conductive material for forming the conductive layer, the lithium carbonate, and acid-modified PVDF as a binder are weighed in a weight ratio of 30:40:30. These materials with an appropriate amount of NMP are put into the rotating/revolving mixer and stirred at 3000 rpm for 5 minutes, preparing a conductive layer coating solution. After mounting a 20 µm-thick aluminum foil on a desktop screen printing machine, the conductive layer coating solution is coated thereon by using a 400 mesh screen. Subsequently, the aluminum foil coated with the conductive layer coating solution is vacuum-dried at 80 °C for 12 hours. Accordingly, on the positive electrode current collector, a conductive layer is formed. After the drying, the conductive layer has a thickness of 15 µm. This conductive layer is adjusted to include 5 parts by weight of the lithium carbonate based on 100 parts by weight of the mixed powder forming the positive electrode active material layer. On this conductive layer, a positive electrode layer is formed by coating and drying the positive electrode active material layer coating solution in the same manner as in Example 1 except that the lithium carbonate is not included in the positive electrode active material layer. The production procedure of the negative electrode layer and procedure thereafter are the same as Example 1.

### (Example 6)

A conductive layer is formed in the same manner as Example 5 except that the content of the lithium carbonate in the conductive layer is adjusted into 25 parts by weight based on 100 parts by weight of the mixed powder forming the positive electrode active material layer.

### (Example 7)

A positive electrode layer is formed in the same manner as Example 5 except that the positive electrode active material layer coating solution is coated and dried on the opposite surface to the side of the positive electrode current collector where the conductive layer is formed.

### (Example 8)

A conductive layer is formed in the same manner as Example 7 except that the content of the lithium carbonate in the conductive layer is adjusted into 25 parts by weight based on 100 parts by weight of the mixed powder forming the positive electrode active material layer.

### (Example 9)

A positive electrode layer is formed in the same manner as Example 1 except that aluminum hydroxide instead of the lithium carbonate is contained in the positive electrode active material layer.

### (Example 10)

A positive electrode layer is formed in the same manner as Example 9 except that the content of the aluminum hydroxide is changed into 10 parts by weight based on 100 parts by weight of the mixed powder forming the positive electrode active material layer.

### (Example 11)

A positive electrode layer is formed in the same manner as Example 9 except that the content of the aluminum hydroxide is changed into 1 part by weight based on 100 parts by weight of the mixed powder forming the positive electrode active material layer.

### (Comparative Example 1)

A positive electrode layer is formed in the same manner as Example 1 except that the lithium carbonate is not included in the positive electrode active material layer.

### (Comparative Example 2)

A negative electrode layer is formed in the same manner as Example 1 except that the lithium carbonate is not included in the positive electrode active material layer, but an amount of 5 parts by weight of the lithium carbonate (i.e., the same amount as used in Example 1) is included in a negative electrode active material layer based on 100 parts by weight of the mixed powder forming the positive electrode active material layer.

### (Comparative Example 3)

A solid electrolyte layer is formed in the same manner as Example 1 except that the lithium carbonate is not included in the positive electrode active material layer, but 5 parts by weight (i.e., the same amount as used in Example 1) of the lithium carbonate is included in the solid electrolyte layer based on 100 parts by weight of the mixed powder forming the positive electrode active material layer.

### (Comparative Example 4)

A negative electrode layer is formed in the same manner as Comparative Example 2 except that aluminum hydroxide instead of the lithium carbonate is contained in the negative electrode active material layer.

### (Comparative Example 5)

A solid electrolyte layer is formed in the same manner as Comparative Example 3 except that aluminum hydroxide is included instead of the lithium carbonate in the solid electrolyte layer.

### (Comparative Example 6)

A positive electrode layer is formed in the same manner as Example 1 except that the content of the lithium carbonate in the positive electrode active material layer is changed into 0.3 parts by weight based on 100 parts by weight of the mixed powder forming the positive electrode active material layer.

### (Reference Example 1)

As a reference example, a liquid system rechargeable battery cell is produced to contain an endothermic material. Hereinafter, a specific experimental method will be described.

### [Production of Positive Electrode Layer]

NCA ternary powder as a positive electrode active material and acetylene black as a conductive aid are weighed and mixed in a weight ratio of 97:3. In addition, 1 part by weight of lithium carbonate based on 100 parts by weight of the mixed powder is weighed and then, mixed with the mixed powder. Subsequently, an NMP solution in which PVdF as a binder is dissolved is added to this mixed powder so that PVdF becomes 3.0 wt% based on the total weight of the mixed powder, producing a primary mixed solution. In addition, an appropriate amount of NMP is added to the primary mixed solution to adjust viscosity, producing a secondary mixed solution. The produced secondary mixed solution is put in a rotating/revolving mixer and stirred at 2000 rpm for 3 minutes, producing a positive electrode active material layer coating solution. After preparing a 20 µm-thick aluminum foil current collector as a positive electrode current collector, mounting the positive electrode current collector on a desktop screen printing machine, and using a metal mask having a diameter of 2.0 cm × 2.0 cm and a thickness of 150 µm, the positive electrode active material layer coating solution is coated on the sheet. Subsequently, the sheet coated with the positive electrode active material layer coating solution is dried on a 100 °C hot plate for 30 minutes and then, vacuum-dried at 180 °C for 12 hours. Accordingly, on the positive electrode current collector, a positive electrode active material layer is formed. After the drying, the positive electrode current collector and the positive electrode active material layer have a total thickness of 120 µm or so. This obtained laminate is press-molded using a roll press to form a positive electrode layer. This positive electrode layer is punched with a 3.0 cm × 3.0 cm Thompson blade.

### [Production of Negative Electrode Layer]

Graphite powder (vacuum-dried at 80 °C for 24 hours) as a negative electrode active material and PVdF as a binder are weighed in a weight ratio of 95.0:5.0. These mixed materials and an appropriate amount of NMP are put in a rotating/revolving mixer, stirred at 3000 rpm for 3 minutes, and foam-removed for 1 minute, producing a negative electrode active material layer coating solution. After preparing a 16 µm-thick copper foil current collector as a negative electrode current collector, the negative electrode active material layer coating solution is coated on the copper foil current collector by using a blade. The negative electrode active material layer coating solution on the copper foil current collector has a thickness of 150 µm or so. The sheet coated with the negative electrode active material layer coating solution is stored in a drying machine heated at 80 °C and dried for 15 minutes. In addition, the sheet after the drying is vacuum-dried at 80 °C for 24 hours. Accordingly, a negative electrode layer is formed. The negative electrode layer has a thickness of 140 µm or so. The negative electrode layer is press-molded using a roll press machine. The negative electrode layer is punched using a 3.5 cm × 3.5 cm Thompson blade.

### [Production of Liquid System Lithium Ion Rechargeable Battery]

As for a separator, a porous polyethylene film (thickness: 12 µm) is used. The separator is interposed between the positive electrode layer and the negative electrode layer, forming an electrode structure. This electrode structure is placed in an aluminum laminate film to which a terminal is attached. An electrolyte solution is prepared by mixing ethylene carbonate and dimethyl carbonate in a volume ratio of 3:7 and dissolving lithium hexafluoro phosphate (LiPF₆) at a concentration of 1.3 mol/L in the obtained non-aqueous solvent. The prepared electrolyte solution is injected into the aluminum laminate film and thus may be impregnated into the separator. After evacuating to 100 Pa with a vacuum machine, the aluminum laminate film is packed through heat sealing. Accordingly, a liquid system lithium ion rechargeable battery cell is produced.

The cells according to Examples 1 to 11 and Comparative Examples 1 to 6 and the reference example are evaluated, and the results are shown in Table 1.

**(Table 1)**

| Sample Nos. | Endothermic material | Layer including endothermic material | Content of endother mic material (parts by weight) | Cell capacity (mAh) | Thickness change after storage at 80 °C | DSC Exothermic amount (J/cm²) | Reduction ratio (%) |
|---|---|---|---|---|---|---|---|
| Example 1 | lithium carbonate | positive electrode active material layer | 5 | 20.3 | 0.6 | 53748 | 17% |
| Example 2 | lithium carbonate | positive electrode active material layer | 10 | 19.4 | 0.6 | 43094 | 33% |
| Example 3 | lithium carbonate | positive electrode active material layer | 1 | 19.9 | 1.0 | 61145 | 5% |
| Example 4 | lithium carbonate | positive electrode active material layer | 25 | 16.5 | 1.0 | 11135 | 83% |
| Example 5 | lithium carbonate | conductive layer | 5 | 19.8 | 0.4 | 52274 | 19% |
| Example 6 | lithium carbonate | conductive layer | 25 | 19.8 | 0.6 | 14225 | 78% |
| Example 7 | lithium carbonate | conductive layer on the rear surface of positive electrode current collector | 5 | 20.5 | 0.6 | 52177 | 19% |
| Example 8 | lithium carbonate | conductive layer on the rear surface of positive electrode current collector | 25 | 20.3 | 0.6 | 12890 | 80% |
| Example 9 | aluminum hydroxide | positive electrode active material layer | 5 | 19.7 | 0.8 | 54800 | 15% |
| Example 10 | aluminum hydroxide | positive electrode active material layer | 10 | 19.4 | 0.4 | 45199 | 30% |
| Example 11 | aluminum hydroxide | positive electrode active material layer | 1 | 20.3 | 0.6 | 62481 | 3% |
| Comparative Example 1 | None | - | - | 19.8 | 0.6 | 64401 | - |
| Comparative Example 2 | lithium carbonate | negative electrode active material layer | 5 | 19.8 | 0.6 | 64404 | 1% |
| Comparative Example 3 | lithium carbonate | solid electrolyte layer | 5 | 20.2 | 0.4 | 65244 | -1% |
| Comparative Example 4 | aluminum hydroxide | negative electrode active material layer | 5 | 20.1 | 0.6 | 64998 | -1% |
| Comparative Example 5 | aluminum hydroxide | solid electrolyte layer | 5 | 19.2 | 0.8 | 64744 | -1% |
| Comparative Example 6 | lithium carbonate | positive electrode active material layer | 0.3 | 19.4 | 0.4 | 63197 | 1% |
| Reference Example 1 | lithium carbonate | positive electrode active material layer | 1 | 19.4 | 32 | | - |

On the other hand, a content of the endothermic material provided in Table 1 indicates an amount of the endothermic material based on 100 parts by weight of the mixed powder for forming a positive electrode active material layer before adding the binder.

Referring to the results of Table 1, Examples 1 to 11, in which greater than or equal to 1 part by weight of lithium carbonate or aluminum hydroxide as the endothermic material based on 100 parts by weight of the positive electrode active material layer is included in the positive electrode layer, exhibit clearly high endothermic effects, compared with Comparative Examples 1 to 6. In addition, even though the endothermic material is included in the conductive layer of the positive electrode layer, sufficient endothermic effects may be achieved. Resultantly, Examples 1 to 11 may provide all-solid-state rechargeable battery cells capable of suppressing sharp exothermicity.

When the content of the endothermic material included in the positive electrode layer is less than or equal to 30 parts by weight based on 100 parts by weight of the positive electrode active material layer, charging capacity of the positive electrode layer may be sufficiently maintained. On the other hand, although not described in the aforementioned examples, when about 50 parts by weight of the endothermic material based on 100 parts by weight of the positive electrode active material layer is included, a battery cell does not operate. The reason is that the endothermic material not contributing to lithium ion conductivity or electron conductivity is excessively included in the positive electrode active material layer.

Herein, since in the all-solid-state battery cells according to the examples and the comparative examples, a thickness change thereof exhibits a volume change, wherein as shown in the result of Table 1, the thickness change under an environment of 80 °C is 1% or less compared with that at room temperature (25 °C), which indicates almost no change. On the other hand, the liquid system lithium ion rechargeable battery cell according to the reference example exhibits a very large volume large change of 32% at 80 °C even though the content of the lithium carbonate is 1 part by weight based on 100 parts by weight of the positive electrode active material layer. This result exhibits that in the liquid system rechargeable battery cell, a decomposition reaction of the endothermic material violently occurs at a low temperature of 80 °C, but the all-solid-state rechargeable battery cell according to the present invention exhibits sufficient endothermic effects at a higher high temperature than 80 °C, and in addition, since the decomposition of the endothermic material is relatively slow up to a temperature of 80 °C or so, battery deformation due to volume expansion may be suppressed.

## Claims

1. An all-solid-state rechargeable battery (1), comprising
a positive electrode layer (10) and a negative electrode layer (20), and
a solid electrolyte layer (30) between the positive electrode layer (10) and the negative electrode layer (20),
wherein the positive electrode layer (10) comprises a plate-shaped positive electrode current collector (11), and a positive electrode active material layer (12) on the positive electrode current collector (11),
the positive electrode layer (10) comprises an endothermic material that absorbs heat by a decomposition reaction, and
a content of the endothermic material in the positive electrode layer (10) is greater than or equal to 1 part by weight and less than or equal to 30 parts by weight when the total weight of the positive electrode active material layer (12) is 100 parts by weight.

2. The all-solid-state rechargeable battery of claim 1, wherein the endothermic material is comprised in the positive electrode active material layer (12), or is disposed between the positive electrode active material layer (12) and the positive electrode current collector (11).

3. The all-solid-state rechargeable battery of claim 1 or 2, wherein the endothermic material is at least one compound selected from the group essentially consisting of a carbonate compound, a hydroxide compound, and a compound containing crystallized water.

4. The all-solid-state rechargeable battery of claim 3, wherein
the carbonate compound is selected from the group consisting of lithium carbonate, rubidium carbonate, barium carbonate, cobalt carbonate, iron carbonate, nickel carbonate, zinc carbonate, sodium bicarbonate, potassium bicarbonate, rubidium bicarbonate, and cesium bicarbonate;
the hydroxide compound is selected from the group consisting of zinc hydroxide, aluminum hydroxide, cadmium hydroxide, chromium hydroxide, cobalt hydroxide, nickel hydroxide, manganese hydroxide, calcium hydroxide, magnesium hydroxide, zirconium hydroxide, iron hydroxide, and nickel hydroxide; and
the compound containing crystallized water is selected from the group consisting of aluminum oxide hydrate, barium nitrate hydrate, calcium sulfate hydrate, cobalt phosphate hydrate, antimony oxide hydrate, tin oxide hydrate, titanium oxide hydrate, bismuth oxide hydrate, and tungsten oxide hydrate.

5. The all-solid-state rechargeable battery of claim 4, wherein the carbonate compound is lithium carbonate.

6. The all-solid-state rechargeable battery of claim 4, wherein the hydroxide compound is aluminum hydroxide.

7. The all-solid-state rechargeable battery of any one of the preceding claims, wherein the solid electrolyte layer (30) comprises a sulfide-based solid electrolyte.

8. The all-solid-state rechargeable battery of any one of the preceding claims, wherein the all-solid-state rechargeable battery (1) further comprises an exterior body for accommodating the positive electrode layer (10), the negative electrode layer (20), and the solid electrolyte layer (30) therein and the exterior body is a film type.

9. The all-solid-state rechargeable battery of claim 8, wherein a difference between a volume in the exterior body at 80 °C and a volume at 25 °C is within 5% of the volume at 25 °C.
